# EUROPEAN PATENT APPLICATION

(11) **EP 4 116 144 A2**
(43) Date of publication of application: **11.01.2023**
(21) Application number: 22178828.4
(22) Date of filing: 14.06.2022
(51) Int. Cl.: B60P 1/36, B60P 3/00, B65G 1/00, G06Q 10/08

(54) **AUTOMATED STORAGE AND RETRIEVAL SYSTEMS AND METHODS**

(30) Priority: 15.06.2021 US 202163210746 P; 10.06.2022 US 202217837303
(71) Applicant: Bell and Howell, LLC, Durham, NC 27713 (US)
(72) Inventor: Paul, Mark, Raleigh, 27606 (US); Daniels, Mahlon, Holly Springs, 27540 (US); Howard, Taner, Raleigh, 27607 (US); Boston, Michael, Kitchene, N2K 4K2 (CA); Johnson, Richard, Fuquay Varina, 27526 (US)
(74) Representative: ip21 Ltd

(57) **Abstract**

A vehicle has an automated storage and retrieval system, the automated storage and retrieval system including an area for storage of items and having locations, each location being suitable for holding one or more of the items; an inductor that receives and inducts the items into the automated storage and retrieval system; a conveyor that conveys the items from the inductor to the area; and an extraction station. When an item is designated for removal from the area, the conveyor delivers the designated item to the extraction station and, after receipt of the designated item from the conveyor, the extraction station delivers the designated item to a designated recipient for extraction of the designated item from the automated storage and retrieval system.

## Description

### TECHNICAL FIELD

The subject matter disclosed herein relates generally to automated storage and retrieval systems and methods. More particularly, the subject matter disclosed herein relates to automated storage and retrieval systems and methods configured for use in mobile settings, including towable and/or motorized devices and settings.

### BACKGROUND

With the increased use of ecommerce and online ordering and parcel or package delivery, more parcels and packages are being delivered than ever before. As more parcels and packages are being delivered via parcel or package delivery trucks, the delivery trucks need to be more efficient in order to keep up with parcel delivery demand to ensure service and delivery times are met.

In today's parcel delivery trucks, parcels are loaded using a zone order that is based on the predetermined delivery route of the delivery truck. The first delivery parcels are placed in the front zone of the truck and the last parcel is placed in the back zone. This requires the loaders to load the truck in proper sequence, so the driver does not have to search for a parcel or package. This method puts a burden on the loading labor, often requiring the driver to adjust parcel placement during the delivery process as well. This ultimately causes extra time during the delivery and leads to higher costs and higher delivery times.

These problems are not exclusive to parcel delivery trucks. They are also present in warehouses, pickup and delivery locations, retail settings, and many other environments. Therefore, there is a need for more efficient automated storage and retrieval systems and methods to reduce the time and cost associated with customer parcel delivery and/or pick-up.

### SUMMARY

In accordance with this disclosure, automated storage and retrieval systems and methods are provided. In one aspect, an automated storage and retrieval system comprises an area configured for holding one or more parcels, a parcel inductor configured to receive and induct the one or more parcels, a parcel conveyor configured to convey the one or more parcels to locations within the area; and a parcel extraction station configured such that, when a parcel is ready to be extracted from the area, the parcel conveyor is configured to deliver the parcel to the parcel extraction station, which is configured such that a user can extract the parcel from the area.

According to an example embodiment, a vehicle comprising an automated storage and retrieval system is provided, the automated storage and retrieval system comprising: an area configured for storage of items and comprising locations, each location being configured for holding one or more of the items; an inductor configured to receive and induct the items into the automated storage and retrieval system; a conveyor configured to convey the items from the inductor to the area; and an extraction station; wherein, when a designated item of the items is designated for removal from the area, the conveyor is configured to deliver the designated item to the extraction station; and wherein, after receipt of the designated item from the conveyor, the extraction station is configured to deliver the designated item to a designated recipient for extraction of the designated item from the automated storage and retrieval system.

In some or all embodiments of the vehicle, the area comprises a plurality of shelves on which are provided one or more self-locking storage trays, bins, and/or storage areas; and items are parcels ranging in size from letters and postcards to parcels as large as the one or more self-locking storage trays, bins, and/or storage areas.

In some or all embodiments of the vehicle, the area comprises a compartment for storing any item that is larger than can be stored in or on the one or more self-locking storage trays, bins, and/or storage areas.

In some or all embodiments of the vehicle, the conveyor comprises one or more of a crane, a robotic arm, and/or a robotic claw.

In some or all embodiments of the vehicle, the crane is configured to move dynamically based on a movement, speed, acceleration, braking, yaw, pitch, and/or tilt of the vehicle.

In some or all embodiments, the vehicle comprises a geo-location-based guidance system configured to provide delivery information to an operator of the vehicle based on an order in which the items are specified to be delivered according to a delivery route.

In some or all embodiments, the vehicle comprises: a geo-location-based guidance system configured to provide delivery information to an operator of the vehicle based on an order in which the items are specified for delivery according to a delivery route; and/or a controller configured to: presort the items within the area based on a delivery address for each of the items, the delivery address for each item of the items being contained in a delivery route manifest provided to the controller; and/or control the conveyor to automatically convey all of the items having a first delivery address to the extraction station at or before a time the vehicle arrives at the first delivery address; and/or before, at the same time, or after all of the items are delivered at the first delivery address, all of the items having a second delivery address are automatically transferred, via the conveyor, to the extraction station, wherein the second delivery address is a subsequent delivery address to the first delivery address in the delivery route.

In some or all embodiments of the vehicle, the vehicle is configured, in an autonomous manner, to determine the delivery route, which contains each delivery address for each of the items inducted into the area; to travel along the delivery route; and to deliver the items to intended recipients of the items along the delivery route.

According to an example embodiment, a parcel delivery system is provided, the parcel delivery system comprising: one or more computing systems comprising route manifest and storage optimization software; and a plurality of the vehicles according to any of the embodiments disclosed herein, each of the plurality of vehicles being in communication with the one or more computing systems; wherein, when executed on the one or more computing systems, the route manifest and storage optimization software is configured to: generate a delivery route manifest for each of the plurality of vehicles, wherein the delivery route manifest for a particular vehicle is generated based on the delivery address for each of the items inducted into the area of the system of the particular vehicle; transmit the delivery route manifest for each of the plurality of vehicles to the automated storage and retrieval system of a corresponding one of the vehicles; generate an optimized storage logic for storage of the items within the area for the system of each vehicle before the items are inducted into the area of each such vehicle; and notify a user of the system when any of the items loaded into the area of one of the systems have a same delivery address.

In some or all embodiments of the parcel delivery system, the route manifest and storage optimization software is configured such that, as the items are delivered along the delivery route, a remaining portion of the delivery route is updated and optimized based on substantially real-time traffic and/or weather data and/or based on an input received from a designated recipient for any of the items that have not yet been delivered.

According to an example embodiment, a method of storing and retrieving items for delivery is provided, the method comprising: providing one or more vehicles, each of which comprises an automated storage and retrieval system, which comprises an area, an inductor, a conveyor, and an extraction station; receiving, using the inductor, items designated for delivery to a same or different delivery addresses; conveying, using the conveyor, the items from the inductor to locations contained within the area; conveying, using the conveyor, a designated item of the items to the extraction station when the designated item is designated for removal from the area; and delivering, using the extraction station, the designated item to a designated recipient for extraction of the designated item from the automated storage and retrieval system after receipt of the designated item from the conveyor at the extraction station.

In some or all embodiments of the method, the area comprises a plurality of shelves on which are provided one or more self-locking storage trays, bins, and/or storage areas; and items are parcels ranging in size from letters and postcards to parcels as large as the one or more self-locking storage trays, bins, and/or storage areas.

In some or all embodiments, the method comprises providing a compartment and storing any item that is larger than can be stored in or on the one or more self-locking storage trays, bins, and/or storage areas within the compartment.

In some or all embodiments of the method, the conveyor comprises one or more of a crane, a robotic arm, and/or a robotic claw.

In some or all embodiments, the method comprises moving the crane dynamically based on a movement, speed, acceleration, braking, yaw, pitch, and/or tilt of the vehicle.

In some or all embodiments, the method comprises providing, using a geo-location-based guidance system, delivery information to an operator driver of the vehicle based on an order in which the items are specified to be delivered according to a delivery route.

In some or all embodiments, the method comprises: providing, using a geo-location-based guidance system, delivery information to an operator of the vehicle based on an order in which the items are specified for delivery according to a delivery route; and/or presorting, using a controller, the items within the area based on a delivery address for each of the items, the delivery address for each item of the items being contained in a delivery route manifest provided to the controller; and/or controlling, using the controller, the conveyor to automatically convey all of the items having a first delivery address to the extraction station at or before a time the vehicle arrives at the first delivery address; and/or automatically transferring, using the controller, all of the items having a second delivery address to the extraction station before, at the same time, or after all of the items are delivered at the first delivery address, wherein the second delivery address is a subsequent delivery address to the first delivery address in the delivery route.

In some or all embodiments, the method comprises, in an autonomous manner: determining the delivery route, which contains each delivery address for each of the items inducted into the area; travelling along the delivery route; and delivering the items to intended recipients of the items along the delivery route.

In some or all embodiments of the method, the one or more vehicles are a plurality of vehicles and the method comprises: providing one or more computing systems comprising route manifest and storage optimization software; connecting each of the plurality of vehicles in communication with the one or more computing systems; and executing the route manifest and storage optimization software on the one or more computing systems to: generate a delivery route manifest for each of the plurality of vehicles, wherein the delivery route manifest for a particular vehicle is generated based on the delivery address for each of the items inducted into the area of the system of the particular vehicle; transmit the delivery route manifest for each of the plurality of vehicles to the automated storage and retrieval system of a corresponding one of the vehicles; generate an optimized storage logic for storage of the items within the area for the system of each vehicle before the items are inducted into the area of each such vehicle; and notify a user of the system when any of the items loaded into the area of one of the systems have a same delivery address.

In some or all embodiments, the method comprises using the route manifest and storage optimization software as the items are delivered along the delivery route to update and optimize a remaining portion of the delivery route based on substantially real-time traffic and/or weather data and/or based on an input received from a designated recipient for any of the items that have not yet been delivered. Although some of the aspects of the subject matter disclosed herein have been stated hereinabove, and which are achieved in whole or in part by the presently disclosed subject matter, other aspects will become evident as the description proceeds when taken in connection with the accompanying drawings as best described hereinbelow.

The present subject matter can be embodied in other forms without departure from the spirit and essential characteristics thereof. The embodiments described therefore are to be considered in all respects as illustrative and not restrictive. Although the present subject matter has been described in terms of certain specific embodiments, other embodiments that are apparent to those of ordinary skill in the art are also within the scope of the present subject matter.

Although some of the aspects of the subject matter disclosed herein have been stated hereinabove, and which are achieved in whole or in part by the presently disclosed subject matter, other aspects will become evident as the description proceeds when taken in connection with the accompanying drawings as best described hereinbelow.

### BRIEF DESCRIPTION OF THE DRAWINGS

The presently disclosed subject matter can be better understood by referring to the following figures. The components in the figures are not necessarily to scale, emphasis instead being placed upon illustrating the principles of the presently disclosed subject matter (often schematically). In the figures, like reference numerals designate corresponding parts throughout the different views. A further understanding of the presently disclosed subject matter can be obtained by reference to an embodiment set forth in the illustrations of the accompanying drawings. Although the illustrated embodiment is merely exemplary of systems for carrying out the presently disclosed subject matter, both the organization and method of operation of the presently disclosed subject matter, in general, together with further objectives and advantages thereof, may be more easily understood by reference to the drawings and the following description. The drawings are not intended to limit the scope of this presently disclosed subject matter, which is set forth with particularity in the claims as appended or as subsequently amended, but merely to clarify and exemplify the presently disclosed subject matter.
FIG. 1 is a cross-sectional view of an example embodiment of a vehicle, in which is arranged an example embodiment of an automated storage and retrieval system (ASRS).
FIG. 2 is an isometric view of the vehicle of FIG. 1, showing an example embodiment of a parcel induction station of, or associated with, the ASRS.
FIG. 3 is a cross-sectional view of the vehicle of FIG. 1, showing an example induction path for a parcel inducted into the ASRS at the parcel induction station.
FIG. 4A is a top internal view of a portion of the vehicle of FIG. 1.
FIG. 4B is an isometric view of a portion of the vehicle of FIG. 1.
FIG. 5 is a schematic illustration for an example embodiment of a parcel delivery system, having a plurality of ASRS's, which are installed within a respective one of a plurality of vehicles, and a computing system in communication with the each ASRS.
FIG. 6 is a schematic illustration of an example embodiment of the vehicle of FIG. 1, in and/or on which an example embodiment of a geo-guidance system is provided.
FIG. 7 is an isometric view of another example embodiment of a vehicle, in which is arranged an example embodiment of an ASRS and which has a retrieval portal positioned on a lateral side of the ASRS.
FIG. 8 is another isometric view of the example embodiment of the vehicle of FIG. 7.
FIG. 9 is an isometric view of an example embodiment of a storage tray for use in an ASRS according to any of the embodiments disclosed herein.
FIG. 10 is an isolated view of the storage tray of FIG. 7 being deposited onto a shelf having a plurality of storage bays positioned thereon to allow for a plurality of storage trays to be deposited onto the shelf.
FIG. 11 is an isometric view of an example embodiment of an ASRS, such as the ASRS installed within the vehicle as shown in FIG. 1.
FIG. 12 is a detailed isometric view of a portion of the ASRS of FIG. 9.
FIG. 13 is an isolated view of a storage tray positioned within a storage bay of an example embodiment of an ASRS, with a transport unit being arranged adjacent to the storage bay for depositing a storage tray within the storage bay and/or removing a storage tray from the storage bay.
FIG. 14 is a bottom view of the storage tray of FIG. 7.
FIG. 15 is a schematic cross-sectional view of a storage tray contained within a storage bay of an ASRS.
FIG. 16 is a schematic cross-sectional view of a storage tray in a first position relative to the storage bay.
FIG. 17 is a schematic cross-sectional view of a storage tray in a second position relative to the storage bay.

### DETAILED DESCRIPTION

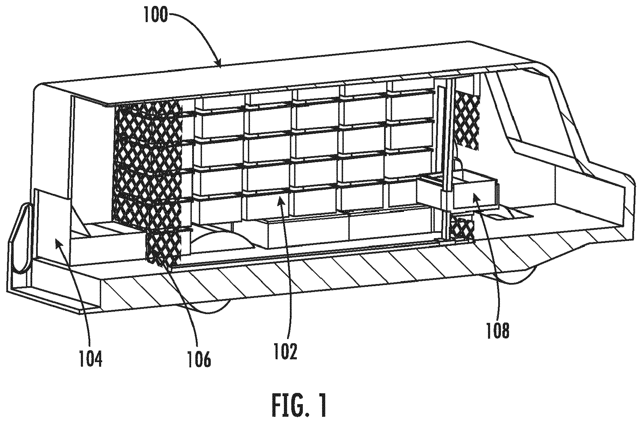

The present subject matter provides example embodiments of automated storage and retrieval systems and methods. In one aspect, the present subject matter provides an automated storage and retrieval system configured to allow a user to efficiently store and retrieve parcels in/from an area. As used herein, the term "parcel" is used to refer to any conveyable goods, including, for example and without limitation, durable goods, perishable goods, pharmaceuticals, parcels, letters, and the like. Referring to FIG. 1, which illustrates an inside view of a delivery truck comprising an example automated storage and retrieval system 100 according to some embodiments of the present disclosure. For example and without limitation, the automated storage and retrieval system 100 can be configured to operate on a vehicle, such as a delivery truck, an automobile, a train, a ferry, aircraft, cruise ship, tanker, or any other suitable vehicle or other mobile environment, including a towed conveyance, such as a trailer towed with a motorized vehicle. In some embodiments, the automated storage and retrieval system is configured to operate within a non-mobile environment, such as a warehouse, retail store, grocery store, or any other suitable location.

In some embodiments, the automated storage and retrieval system **100** comprises an area **102** configured or holding one or more parcels. In some embodiments, the area **102** can be a large open space with little to no organization mechanisms (i.e., shelves, drawers, etc.). In some embodiments, the area **102** can comprise one or more trays, drawers, shelves, or any other suitable organization mechanism. In the embodiment depicted in FIG. 1, the area **102** comprises one or more automatically operated drawers (i.e., they are automatically opened and closed). In some embodiments, the area **102** includes a dedicated compartment for extra-large parcels that cannot fit in the one or more storage trays or bins. In some embodiments, the storage trays, bins, drawers, etc., are configured such that they are secured and as stationary as possible even when the delivery truck has a severe pitch or tilt.

In some embodiments, the automated storage and retrieval system **100** comprises a parcel inductor **104** configured to induct one or more parcels into the area **102.** In some embodiments, the parcel inductor **104** can be a simple door or flap that is opened and the parcel and is given to the parcel conveyor **106.** The parcel inductor **104** can also be a be an electronically operated or mechanically operated crane or other suitable device. In some embodiments, the parcel inductor **104** can be configured to receive parcels from a human, a robot, or a drone. In any case, the parcel inductor **104** can be retrofitted to receive the parcels via any suitable means. For example and without limitation, if a parcel is received via drone, the parcel inductor can include a platform or other suitable device to help receive the drone. In some embodiments, the parcel inductor **104** is configured to retrieve packages from a standard distribution warehouse dock using manual pick and place methods or automated sortation conveying systems. In some embodiments, the automated storage and retrieval system **100** is configured to induct and retrieve packages from an aerial package transport device or other autonomous delivery transport systems.

In some embodiments, the parcel inductor **104** comprises, is connected to, or interfaces with the parcel conveyor **106.** In some embodiments, the parcel conveyor **106** can comprise a conveyor belt, a crane, a robotic arm, a robotic claw, or other suitable device configured to convey the parcels inducted into the parcel inductor **104** into the area **102.** Once the parcel has been conveyed to its destination within the area **102,** a mechanism is configured to deliver the parcel to a shelf, drawer, tray, etc. from the parcel conveyor **106.** In some embodiments, this mechanism could be a robotic arm, a lift, an elevator, mechanical claw, etc. In some other embodiments, the conveyor **106** comprises a robotic arm or crane which is configured to convey the parcels from the parcel inductor **104** to the appropriate tray, shelf, drawer, etc.

In some embodiments, the mechanism (not shown) configured to convey the parcel from the parcel conveyor **106** to the shelf, drawer, tray, etc. is also configured to take out a parcel from the tray, drawer, shelf, etc., convey it back to the parcel conveyor **106,** which is then configured to convey the parcel to the parcel extraction station **108** configured such that a user of the automated storage and retrieval system **100** can obtain the parcel from the parcel extraction station **108.** For example and without limitation, as shown in FIG. 1, the parcel extraction station **108** can be a slot, hole, and/or mechanism configured to allow the parcel to be conveyed out of the area **102.** In some embodiments, for example and without limitation, the parcel extraction station **108** can be a slot or hole where the parcel conveyor **106** can convey the parcel sitting inside of one of the trays or drawers out of the area **102** for the user to extract. In some embodiments, the parcel extraction station **108** can be an opening in the area **102** where one or more parcels are conveyed for extraction.

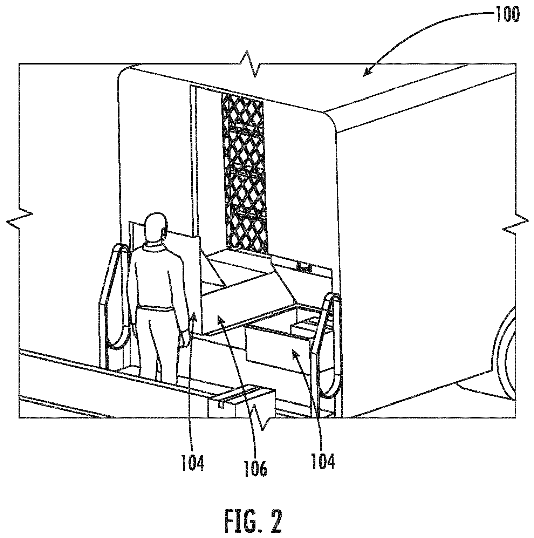

Referring next to FIG. 2, which illustrates the parcel induction station **104.** In some embodiments, the parcel induction station **104** can be located at the back of a delivery truck or any other suitable area **102** where the automated storage and retrieval system **100** is located. In some embodiments, a user, such as a person, drone, robot, or any other suitable user, can approach the parcel induction station **104** with a parcel and induct the parcel into the automated storage and retrieval system **100** via the parcel induction station **104.** In some embodiments, the automated storage and retrieval system **100** can comprise one or more parcel induction stations **104.** For example, as illustrated in FIG. 2, in some embodiments, the automated storage and retrieval system **100** can comprise two parcel induction stations **104.**

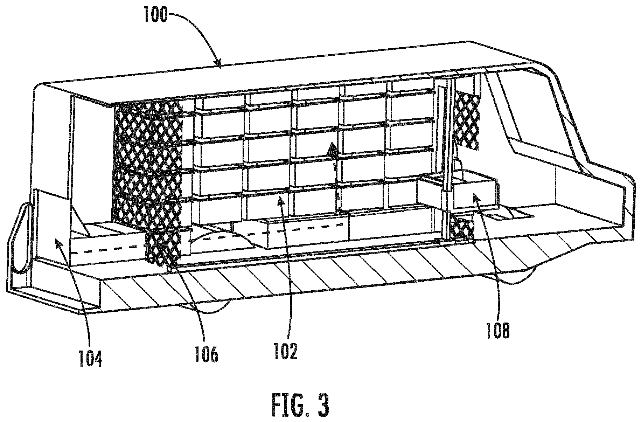

Referring next to FIG. 3, which illustrates the path that a parcel follows (arrow) along the parcel conveyor **106.** As described above, once the parcel is inducted and received by the parcel conveyor **106**, the parcel is deposited, either by the parcel conveyor itself (if it is a robotic arm or crane or other device) or by a separate mechanism, such as a robotic arm, crane, or other device separate from the parcel conveyor, into one of the trays, shelves, bins, or drawers. Although this illustration only shows half of the inside of an example delivery truck, as described above, the delivery truck can have shelves of bins, trays, and drawers on both sides of the truck inside the area **102.** In some embodiments, the trays, bins, drawers, or other storage areas can be self-locking trays. In some embodiments, the area **102** comprises one or more storage trays, bins, or drawers/storage areas configured to store parcels ranging in size from letters and postcards to parcels as large as the one or more storage trays, bins, or storage areas.

In some embodiments, the parcel conveyor **106** comprises a crane configured to move dynamically based on the delivery truck's movement, speed, acceleration, braking, tilt, and other similar environmental forces. In some embodiments, the area **102** includes a dedicated compartment for extra-large parcels that cannot fit in the one or more storage trays or bins.

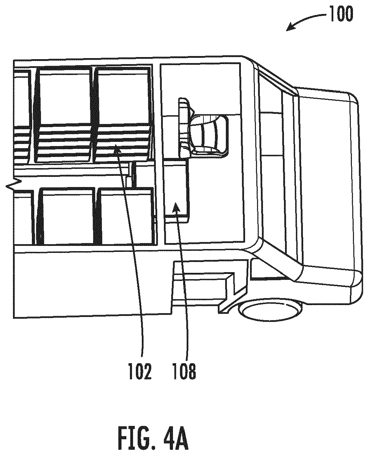

Referring to FIG. 4A, which illustrates a top inside view of an example delivery truck comprising an automated storage and retrieval system **100** according to some embodiments of the present disclosure. As illustrated in FIG. 4A, the parcel extraction station **108** is located near the seat of the driver of the delivery truck. In some embodiments, automated storage and retrieval system **100** can remove the tray, drawer, or other storage area where the parcel being extracted is located and move it out of the area **102** via the extraction station **108**. As illustrated in FIG. 4A, the drawer, tray, etc. itself can be, at least partially, pushed via the automated storage and retrieval system **100** out of the area **102** through the extraction station **108**, where the parcel is presented to the user (i.e., driver in this embodiment) for extraction and delivery. In some embodiments, including, for example, embodiments in which the vehicle is an autonomous vehicle, the user referenced herein can be a customer to whom the parcel is intended to be delivered.

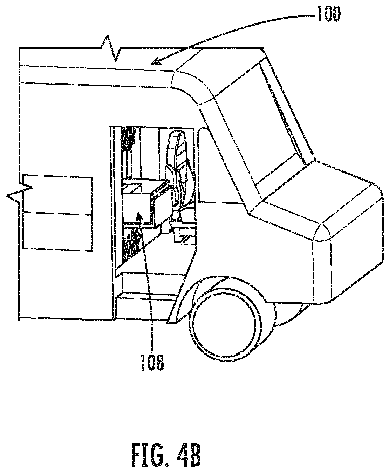

Referring to FIG. 4B, which illustrates an exterior view of the inside front portion of the example delivery truck which gives a better view of the extraction station **108**. In some embodiments, the extraction station **108** can comprise a drawer, slot, or other suitable mechanism that interfaces the area **102** with the front of the delivery truck. As illustrated in FIG. 4B, once the tray, drawer, bin, etc. containing the parcel to be extracted is placed in or through the extraction station **108**, the delivery truck driver, or user, can extract the parcel and deliver it.

In an embodiment, the extraction station **108** comprises an automatic or non-automatic drawer that is configured to open towards the front of the delivery truck with the parcel inside. The drawer can either be manually opened by the user (i.e., the driver) or it can be automatically opened by an electronic motor or actuator or other suitable device. Once the drawer is opened, the user can extract the parcel and deliver it.

In some embodiments, the automated storage and retrieval system **100** is encompassed in an autonomous delivery truck, wherein the delivery truck is configured to navigate and drive itself using autonomous driving software and other suitable equipment needed to navigate and operate the delivery truck. In some embodiments, the autonomous delivery truck is configured to drive itself to predetermined locations for consumer or customer pick-up. In such an embodiment, the autonomous delivery truck is configured with autonomous cranes, robotic arms, conveyor belts, and other mechanisms to automate the entire process of inducting a parcel, conveying the parcel into the area **102** and extracting the parcel and deliver it automatically, using the autonomous cranes, robotic arms, etc.

In some embodiments, the automated storage and retrieval system **100**, including those on the delivery trucks, is configured to operate untethered from standard AC line power. In some other embodiments, the automated storage and retrieval system **100** is configured to operate when the delivery truck engine or drive motor is off.

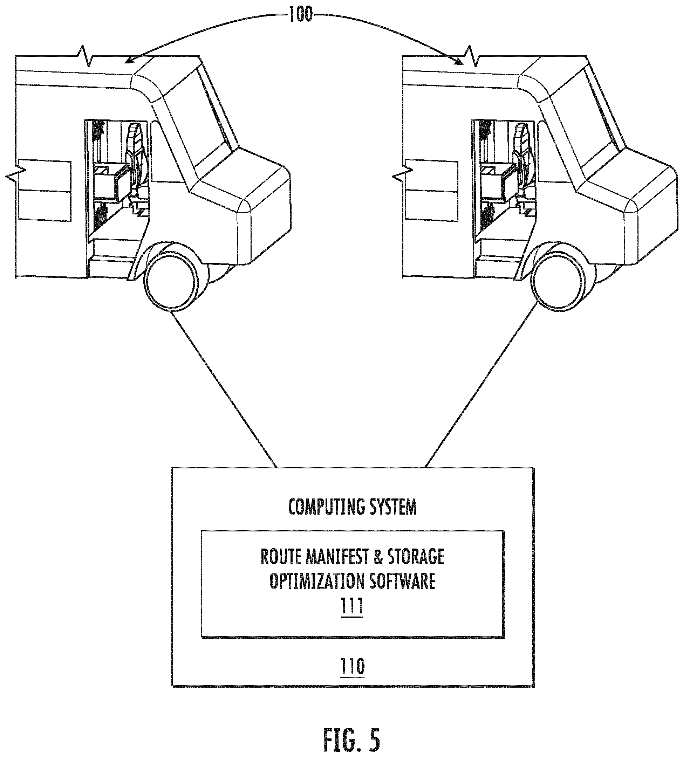

Regardless of whether the delivery truck is automated or driven by a human, the way that the parcels are inducted and organized in the area **102** of the automated storage and retrieval system **100** is based on a parcel delivery route manifest of the delivery truck. Referring to FIG. 5, which illustrates a parcel delivery system comprising one or more automated storage and retrieval systems **100** encompassed within one or more delivery trucks and a computing system **110** in communication with the one or more automated storage and retrieval systems **100**.

In some embodiments, the computing system **110** is configured to generate the parcel delivery route manifest of the one or more delivery trucks. The computing system **110** is configured to calculate this by determining where all the pending parcels are to be delivered, efficiently organizing them for each specific delivery truck, and then pre-sorting the parcels so that they can be inducted into the automated storage and retrieval system **100** in the most efficient way possible for delivery. Once the parcel delivery route manifest is generated by the computing system **110**, the computing system **110** is configured to transmit a relevant portion of the route manifest to each corresponding delivery truck. For example, each delivery truck will have a route that corresponds to a portion of the parcel delivery route manifest. The induction process includes presorting the parcels as they are being stored in the area **102**. The presorting process is performed based on the route manifest (i.e., sorting in the area **102** based on the delivery address of the parcels) and then the parcels are stored in the area using a storage optimization software that calculates how best to optimize and store the parcels. In some embodiments, the route manifest and storage optimization software **111** is configured to generate an optimized storage logic for storing parcels in the one or more storage trays, bins, or storage areas before the parcels are inducted into the area. In some embodiments, the route manifest and storage optimization software **111** is further configured such that as the parcels are delivered the relevant portion of the route manifest is updated and optimized. Additionally, in some embodiments, the parcel delivery system is configured to notify a driver of the delivery truck that one or more secondary parcels go to the same destination address.

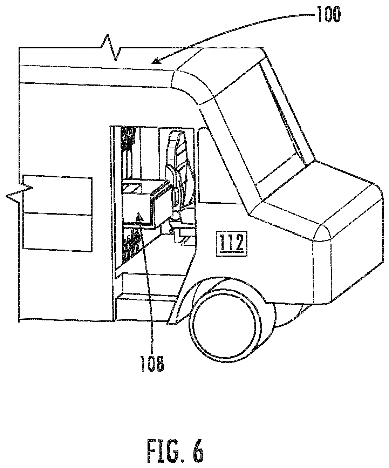

Referring to FIG. 6, in some embodiments, the automated storage and retrieval system **100** can comprise a geo-guidance system **112** configured to help navigate corresponding delivery truck that the geo-guidance system **112** is attached to based on the parcel route manifest. In some embodiments, the geo-guidance system is configured to provide delivery information to the driver of the delivery truck based on the parcel being delivered, this includes delivery information to an automated driver of the delivery truck.

In some embodiments, the geo-guidance system **112**, and the parcel conveyor are configured to communicate with each other in order to extract the parcel that currently needs to be delivered or the one that needs to be delivered next. In some embodiments, as the current parcel is being delivered, the geo-guidance and parcel conveyor are configured to communicate with each other in order to start the extraction process of the parcel that is next up for delivery. In other words, which the delivery driver is dropping off the next package, the automated storage and retrieval system **100** is configured to determine the next stop for parcel delivery based on the route manifest and the geo-guidance system and then automatically take down the next parcel (or bin that the next parcel is located) and convey it to the parcel extraction station.

In some embodiments, if more than one parcel is to be delivered at the current delivery location of the delivery truck, the automated storage and retrieval system **100** is configured to inform the user or delivery truck driver that the multiple parcels are to be delivered. In some embodiments, the parcel conveyor is configured to automatically convey an appropriate parcel to the parcel extraction station at or before a time a driver of the delivery truck arrives at the delivery address of the appropriate parcel.

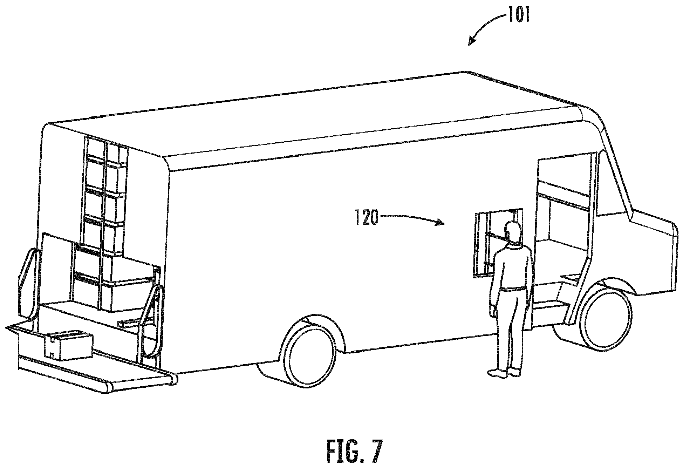

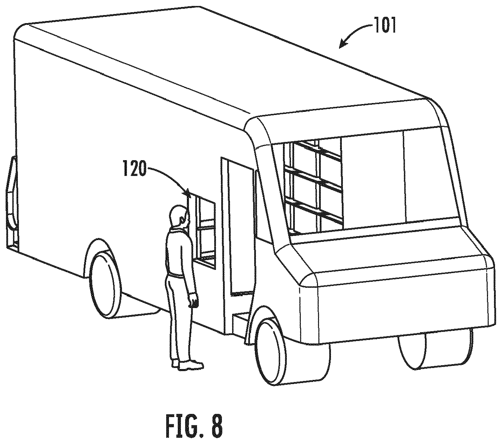

FIGS. 7 and 8 show various aspects of another example embodiment of a vehicle with an automated storage and retrieval system **101** provided therein. Automated storage and retrieval system **101** is generally similar to automated storage and retrieval system **100** and like structures and features will not be described again herein. The automated storage and retrieval system **101** includes an external parcel retrieval station, generally designated **120**, through which parcels stored and transported within the automated storage and retrieval system **101** are movable through an opening formed in and through an external surface of the vehicle, such as the lateral side of the vehicle. The automated storage and retrieval system **101** is advantageously equipped with a user-authentication system, which can be positioned at the external parcel retrieval station **120**, so that the identity of the person at the external parcel retrieval station **120** can be authenticated to prevent delivery of parcels to unauthorized persons. The vehicle shown in FIG. 8 can be, for example, an autonomous vehicle (e.g., a vehicle that is operated without a human operator, or driver) that is configured to detect the presence of a person, stop, and allow the person access to the external parcel retrieval station **120**. Once the parcel is retrieved by the user, the autonomous vehicle can detect that the user is a sufficiently safe distance away and then proceed to the next place where a parcel is to be delivered.

In some embodiments, the vehicle, whether autonomous or operated by a human, can be summoned by a user (e.g., by sending a command through software, such as a mobile application), such that the route of the vehicle can be updated in real-time based on user input and/or availability. For example, an optimized route may be planned for delivery of all of the parcels within a specific geographic location or boundary and recipients may be notified of an estimated time of arrival of the vehicle. If a recipient is expected to be unavailable around the estimated time of arrival, the recipient may send a command (e.g., press a virtual button on a software interface, such as a mobile application) containing the customer's unavailability and, optionally, a period of time during which the customer would be available. In response, the vehicle, or a centralized controller for one or more vehicles, would receive this input and calculate a new optimized route, if necessary, to provide delivery to the recipient either during the period of time indicated by the recipient or to reschedule for another day. This is particularly advantageous when an autonomous vehicle is used or when, for example, the parcel must be delivered directly to the recipient, such as in instances where signature is required for proof of delivery.

In some embodiments, the automated storage and retrieval systems **100**, **101** disclosed herein can include a portion, or all, of the area **102** that is chilled or refrigerated to a prescribed temperature to allow for the transport and delivery of temperature-sensitive items, such as perishable foods, medications that must be stored within prescribed temperature limits, and other similar temperature-sensitive items. In some embodiments, the area **102** could be heated above an ambient temperature to maintain a temperature of items contained within, such as prepared meals.

As used herein, the terms user, recipient, and person can be used interchangeably to refer to the driver or operator of the vehicle or to the person designated for receipt of a parcel.

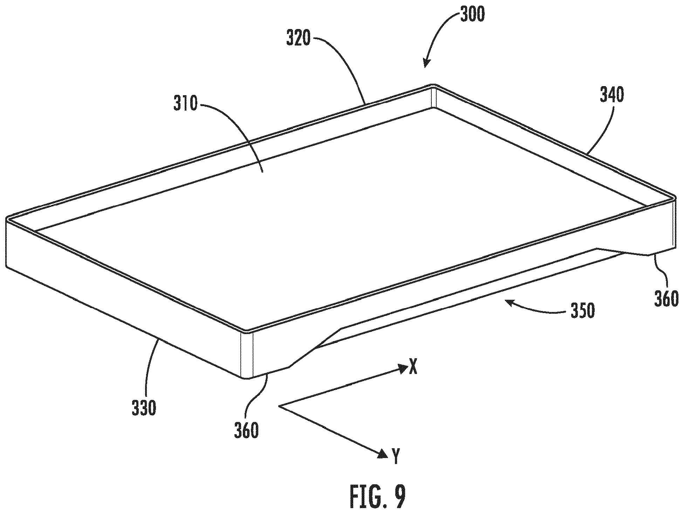

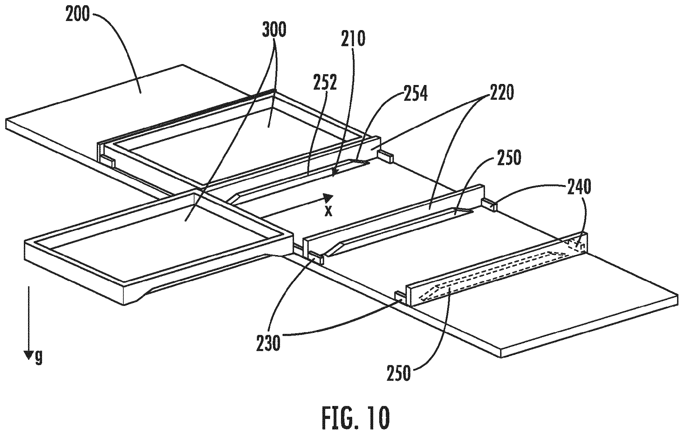

FIG. 9 shows various aspects of an example embodiment of a storage tray, generally designated **300**, which is suitable for use in the automated storage and retrieval systems **100** disclosed herein. In conjunction with the features of the example embodiment of the shelf **200** shown in FIGS. 10-17, the storage tray **300** and the features of the shelf **200** form a self-locking assembly suitable for securing items therein even during transport (e.g., while being driven in a conveyance, such as a motor vehicle, and, particularly, in a parcel delivery truck).

Each storage tray **300** has an upper surface **310**, which is in contact with (e.g., direct contact) one or more items positioned thereon (e.g., in direct contact with). The upper surface **310** has, around a perimeter of the upper surface **310**, a vertical wall **320** that extends vertically upwardly and away from the upper surface **310**, the vertical wall **320** being designed, provided, and/or configured to prevent items positioned on the upper surface **310**, within the area defined by the vertical wall **320**, from being dislodged from (e.g., from falling off of) the storage tray **300** during normal operation. The size of the upper surface **310** is advantageously larger than, or substantially similar to, the items designated for being positioned on the storage tray **300**. The storage tray **300** has a recess, generally designated **350**, formed on each lateral side thereof, the lateral sides extending (e.g., entirely) between the front surface **330** and the rear surface **340.**

Each shelf **200** has a plurality of dividers **220** spaced out along the width thereof (e.g., in the Y-direction) to form a plurality of storage bays, generally designated **210,** along the length of each shelf **200.** In some embodiments, a plurality of shelves **200** are arranged to form a two-dimensional array of storage bays **210** (e.g., within one or more regions of an automated storage and retrieval system **100**). The dividers **220** are, in some embodiments, integrally formed (e.g., in a monolithic fashion) with each shelf **200**; in some other embodiments, the dividers **220** are movably (e.g., in the Y-direction) attached to a shelf **200,** thereby allowing for the dimensions of each storage bay **210** on a shelf **200** to be configurable and/or adjustable, such as may be based on the shape of the storage tray **300** designated to be placed and/or held in such storage bay **210.** In an example embodiment of such a shelf **200** having movable dividers **220,** the shelf **200** may have a plurality of attachment features arranged along the width thereof, in the Y-direction. The arrangement of the attachment features along the shelf **200** can be according to any suitable layout and can include, for example, a pattern. In some embodiments, each attachment feature of the shelf can be a hole, a clip, a portion of a clip, a connector, a portion of a connector, and/or any suitable type of attachment. The dividers **220** then are provided with one or compatible, or mating, attachment features that are configured for engagement with the attachment features (e.g., protrusions, a clip, a portion of a clip, a connector, a portion of a connector, and/or any suitable type of fastener) on the shelf **200,** such that, by engagement of the attachment features of the dividers **220** with the attachment features of the shelf **200,** a rigid attachment of the dividers **220** to the shelf **200** is provided.

For example, in embodiments in which the attachment features of the shelf **200** are holes formed partially or entirely through the thickness of the shelf **200,** each divider **220** may have one or more pins or other suitable longitudinally extending member for locking insertion within one of such holes formed in the shelf **200.** In some embodiments, the attachment feature(s) of the dividers **220** may be keyed to prevent rotation of the dividers **220** relative to the shelf **200.** In another example embodiment, both the shelf **200** and the dividers **220** can have compatible mating clips that connect rigidly together, either in a permanent or removable manner. In some embodiments, the dividers **220** may be riveted to the shelf **200** to form a plurality of storage bays, generally designated **210,** along the shelf **200.** In any of the embodiments disclosed herein, each of the storage bays **210** may have a width that is substantially identical to (e.g., allowing for assembly tolerances) each other, or one or more of the storage bays **210** may have a width that is different from a width of other storage bays **210.** The storage bays **210** can be provided in any suitable dimension and arrangement, such as may be advantageous for accommodating a storage tray **300** having particular dimensions therein.

A protrusion **250** is provided along the lateral edges (e.g., in the Y-direction) of each storage bay **210,** extending along the length (e.g., in the X-direction) of the divider **220** and also in the Y-direction. The protrusions **250** can be referred to as a "lock" elsewhere herein. Each storage bay **210** may have any suitable number of protrusions **250,** however, in the example embodiment shown, each storage bay **210** has two protrusions **250,** each protrusion **250** being arranged on opposite sides of the storage bay **210** in the Y-direction from the other protrusion **250** in the same storage bay **210.** The protrusions **250** can be integrally formed with (e.g., in a monolithic, unitary, indivisible fashion) an adjacent divider **220** or can be rigidly attached an adjacent divider **220.** In some embodiments, the protrusions **250** are physically separate from (e.g., are not adjoined to) the dividers **220.** In some embodiments, the protrusions **250** can be spaced apart from (e.g., not in direct contact with, having an air gap between) the adjacent divider **220;** in such embodiments, the protrusion **250** can be directly affixed to the surface of the shelf **200.**

As noted elsewhere herein, each storage tray **300** has a recess **350** formed on each lateral side of the storage tray **300.** The recess **350** is substantially the same size as the protrusion **250,** so that the protrusion **250** can be positioned within, partially and/or entirely, the recess **350.** The protrusion **250** and the recess **350** advantageously extend less than a full length of the divider **220** with which such protrusion **250** and recess **350** are associated. The protrusion **250** has a flat top surface **252** and a sloped surface **254** at each end of the top surface **252** in the Y-direction. The recess **350** has surfaces that correspond to (e.g., are substantially identical to) the top surface **252** and the sloped surfaces **254,** such that the recess is shaped to have a profile, when viewed in the X-direction, that is substantially identical to the profile of the protrusion **250,** when viewed in the X-direction. Thus, the recess **350** is essentially formed as a negative space of the protrusion **250.** As shown, the protrusion **250** and the recess **350** have general shape of a trapezoidal prism. The recess **350** is formed such that the sloping portions thereof have an angle that is substantially identical to the angle of the sloped surface **254** of the protrusion **254** at the same end thereof in the Y-direction.

The slope of the respective surfaces of the protrusion **250** and the recess **350** at a first end of the shelf **200** and the storage tray **300,** respectively, can be the same as or different from the slope at of the protrusion **250** and the recess **350** a second end of the shelf **200** and the storage tray **300,** respectively, the second end being an opposite end from the first end in the Y-direction. As such, the storage tray **300** has, adjacent to the respective first and second ends of the recess **350,** a flat portion **360** on the lateral sides (e.g., in the Y-direction) of the storage tray **300,** the flat portion **360** being adjacent to the front surface **330** and the rear surface **340.** The flat portions **360** are surfaces of the storage tray **300** on which the storage tray **300** can slide along the sloped and flat surfaces **252, 254** of the protrusion **250,** such sliding of the flat portion **360** along one of the sloped surfaces **254** causing a vertical and lateral movement that changes a vertical positions of the storage tray **300,** such that the bottom surface (e.g., the flat portions **360**) of the storage tray **300** is at a same vertical position as the flat top surface **252** of the protrusion **250.** The protrusions **250** in a same storage bay **210** advantageously have a same height so that the storage tray **300** is substantially flat while the flat portion(s) **360** slide over and/or along the length of the flat top surface **252** of the protrusions **250.**

At least one (e.g., one or a plurality of) front wall **230** is arranged at the front edge of the storage bay **210** and at least one (e.g., one or a plurality of) rearwall **240** is arranged at the rear edge of the storage bay **210.** The front and rear walls **230, 240** advantageously have a same height as the protrusions **250** in the same storage bay **210,** so that the top surface of the front and rear walls **230, 240** is substantially coplanar with the flat top surface **252** of the protrusions **250** in the same storage bay **210.** The attachment of the front and rear walls **230, 240** can be the same as or different from the attachment type by which the dividers **220** are secured to the shelf **200.** In some embodiments, the shelf **200** may have a plurality of attachment features arranged along the width thereof, in the Y-direction, the attachment features corresponding to positions where a front wall **230** or a rear wall **240** can be secured to the shelf **200.** The arrangement of the attachment features along the shelf **200** can be according to any suitable layout and can include, for example, a pattern. In some embodiments, each attachment feature of the shelf can be a hole, a clip, a portion of a clip, a connector, a portion of a connector, and/or any suitable type of attachment. The front and rear walls **230, 240** then are provided with one or compatible, or mating, attachment features that are configured for engagement with the attachment features (e.g., protrusions, a clip, a portion of a clip, a connector, a portion of a connector, and/or any suitable type of fastener) on the shelf **200**, such that, by engagement of the attachment features of the front wall **230** or rear wall **240** with the attachment features of the shelf **200,** a rigid attachment of the front and rear walls **230, 240** to the shelf **200** is provided.

By way of example, in embodiments in which the attachment features of the shelf **200** are holes formed partially or entirely through the thickness of the shelf **200,** each front wall **230** or rear wall **240** may have one or more pins or other suitable longitudinally extending member for locking insertion within one of such holes formed in the shelf **200.** In some embodiments, the attachment feature(s) of the front and/or rear walls **230, 240** may be keyed to prevent rotation of the front wall **230** or rear wall **240** relative to the shelf **200.** In another example embodiment, both the shelf **200** and the front and/or rear walls **230, 240** can have compatible mating clips that connect rigidly together, either in a permanent or removable manner. In some embodiments, the front and/or rear walls **230, 240** may be riveted to the shelf **200** to form the front and rear boundary edges, respectively, of the storage bay **210** in which such front and/or rear walls **230, 240** are provided.

The front and rear walls **230, 240** at the front and rear edges of the storage bays **210,** as well as the positioning of the protrusions **250** within a corresponding one of the recesses **350** formed in the storage tray **300** act in concert to prevent, resist, and/or restrict movement of the storage tray **300** positioned within the storage bay **210** relative to the shelf **200** in the X-direction without the bottom surface of the storage tray **300** at the front surface **330** and/or the rear surface **340** being vertically displaced (e.g., lifted) within the storage bay **210.** The front and rear walls **230, 240** are advantageously arranged at the lateral edges (e.g., spaced apart in the Y-direction) of the storage bay **210** and extend into the storage bay **210** in the Y-direction by a distance greater than a thickness of the recesses **350** of the storage tray **300** in the Y-direction, such that the edges of the storage tray **300** that form an inner surface of the recess **350** are positioned to contact and slide over the top surface of the front wall(s) **230** as the storage tray **300** is deposited into the storage bay **210** or removed from the storage bay **210.**

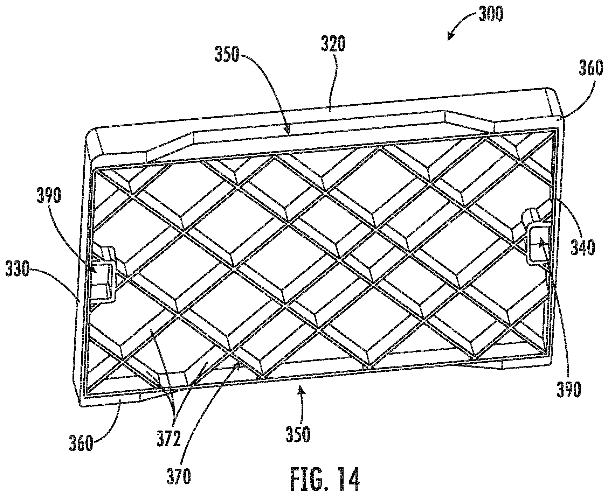

Each protrusion **250** extends generally longitudinally in the X-direction on an opposite sides of the storage bay **210** from another protrusion **250.** Advantageously, the protrusions **250** in the same storage bay **210** have the same shape as each other. In the embodiment shown, the protrusions **250** have a length (in the X-direction) that is less than the length of the divider **220** to which the protrusion **250** is adjacent, but the protrusions **250** in a storage bay **210** may be the same length as or, in some embodiments even, longer than the dividers **220** that define the lateral boundary edges of the storage bay **210** in which such protrusions **250** are provided. As such, in the example embodiment shown in FIG. 14, the storage tray **300** has a bottom surface, generally designated **370,** with a profile (e.g., outline) that is generally in the shape of the letter "i", in which the vertical portion of the "i" has a width that is only slightly smaller than (e.g., having a width that is at least 75%, 80%, 85%, 90%, or 95% of) the total width of the "i", which is defined by the horizontally-extending portions. "Vertical" and "horizontal" are, as used immediately hereinabove, used to refer to literally the shape of the letter "i" and are not made in reference to any specific accompanying drawing.

Stated somewhat differently, but still referring to the example embodiment shown in FIG. 14, the bottom surface **370** of the storage tray **300** has a profile that is generally in the shape of a large rectangle, with "tabs" in the form of smaller rectangles (e.g., defined by the bottom surface of the flat portions **360)** attached to the corners of the large rectangle on the lateral edges of the large rectangle (e.g., in the Y-direction). The dimensions of the smaller rectangles are determined by the difference between the length of the storage tray **300** and the recesses **350** (e.g., both as measured in the X-direction) and also by the depth of the adjacent recess **350** (e.g., as measured in the Y-direction). Non-rectilinear shapes can be used for any of the large rectangle and the smaller rectangles in lieu of the generally rectangularly-shaped structures shown in the example embodiment shown in FIG. 14. As such, when the storage tray **300** is being deposited into, or removed from, one of the storage bay **210** defined on the shelf **200,** the flat portions **360** formed on the bottom surface **370** at the longitudinal ends of the recesses **350** are in contact with (e.g., direct contact) and slide along the flat top surface **252** and the sloped surface **254** of one of the protrusions **250** in the storage bay **210** into which, or from which, the storage tray **300** is being moved. The protrusions **250** have a thickness, as measured in the Y-direction, such that a distance, as measured in the Y-direction, between protrusions **250** in the same storage bay **210** is smaller than the width of the storage tray **300.**

The shelf **200** has an upper surface against which the dividers **220,** protrusions **250,** and/or front and/or rear walls **230, 240** are attached (e.g., directly). Advantageously, the recesses **350** have a height (e.g., as measured in the direction of gravity, g) that is the same as, or less than, a height of the protrusion **250** with which such recess **350** will be aligned (e.g., to be substantially coaxial with in the X-direction), such that the bottom surface **370** of the storage tray **300** can rest against (e.g., be in direct or indirect contact with) the upper surface of the shelf **200.**

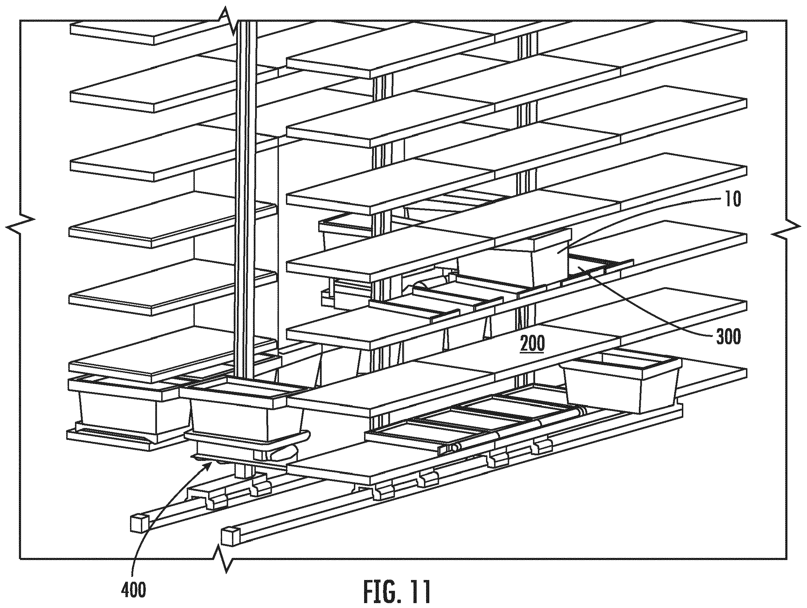

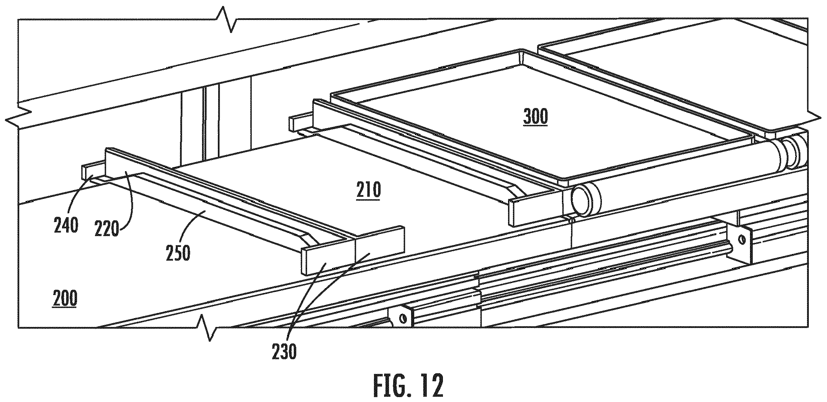

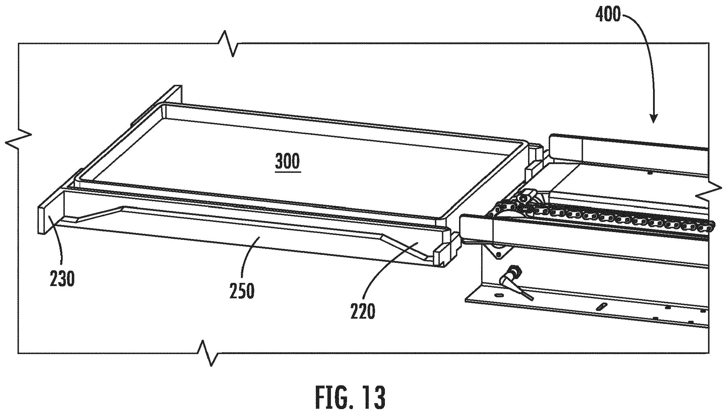

As shown in FIG. 12, the divider **220,** the protrusion **250,** the front wall **230,** and the rear wall **240** can be formed in a unitary, undivided, and/or monolithic structure (e.g., in a single piece requiring no assembly). In FIG. 14, the storage tray **300** is shown as having, between the surface on which the items are supported and the bottom surface **370,** a honeycomb, or latticed, structure formed from a plurality of ribs **372** to advantageously provide a weight reduction for the storage tray **300.** FIGS. 11 and 13 show various aspects of a transport system, generally designated **400,** configured to transport storage trays **300** within an automated storage and retrieval system, an example of which is disclosed elsewhere herein, as well as to deposit and retrieve storage trays **300** into and/or from, respectively, one of the storage bays (e.g., **210)** on the shelf **200.** As shown in FIG. 14, a movement feature, generally designated **390,** is formed in the bottom surface **370** of the storage tray **300,** the movement feature **390** extending in the vertical direction (e.g., perpendicular to the plane formed by the X- and Y-directions) and having a cross-sectional shape that allows the transport system **400** to engage within the movement feature **390** (e.g., in the manner of a finger engaging within a cavity) to lift, move, deposit, and/or retrieve a storage tray **300** within the automated storage and retrieval system.

During deposit of the storage tray **300** into a designated storage bay **210,** the transport system **400** is configured to engage with the movement feature **390** and drive the storage tray **300** within the designated storage bay **210** in the X-direction, sliding the storage tray **300** over the top surface of the front wall(s) **230** at the front edge of the storage bay **210** and the flat top surface **252** of the protrusions **250,** as far as the rearmost (i.e., in the Y-direction) sloped surface **254** thereof, at which point the storage tray **300** slides along the sloped surface **254** until the rear surface **340** of the storage tray **300** contacts the rear wall(s) **240** at the rear edge of the storage bay **210** and/or until the bottom surface **370** of the storage tray **300** contacts the top surface of the shelf **200** within the storage bay **210,** at which time the transport system **400** is configured to lower the front surface **330** of the storage tray **300** until the bottom surface **370** of the storage tray **300** is in contact with (e.g., coplanar with, including in direct contact with) the upper surface of the shelf **200** within the designated storage bay **210.** As such, the front wall(s) **230** at least at the front edge of the storage bay **210** are spaced laterally apart (e.g., in the Y-direction) from the position of the movement feature **390** so as to not block access of the transport system **400** to the movement feature **390.**

During removal of the storage tray **300** from a storage bay **210,** the transport system **400** is configured to engage with the movement feature **390** and lift the front surface **330** of the storage tray **300** within the storage bay **210** to a height that is the same as, or higher than, a height of the top surface of the front wall(s) **230** at the front edge of the storage bay **210.** The transport system **400** is then configured to pull, via engagement with the movement feature **390,** the storage tray **300** out of the storage bay **210** in the X-direction. As the storage tray **300** moves relative to the storage bay **210** in the X-direction, the flat portions **360** of the storage tray **300** slide along the sloped surface **254** of a respective one of the protrusions **250** until reaching the flat top surface **252** of the protrusions **250,** at which point the storage tray **300** is advantageously in a flat orientation (e.g. defining a plane perpendicular to gravity, **g**). The transport system **400** then continues to remove the storage tray **300** from the storage bay **210** by pulling on the movement feature **390,** sliding the flat portions **360** along the flat top surface **252** of a respective one of the protrusions **250** until the flat portions **360** pass over the front wall(s) **230** at the front edge of the storage bay **210,** at which point the storage tray **300** is considered to have been entirely removed from the storage bay **210.**

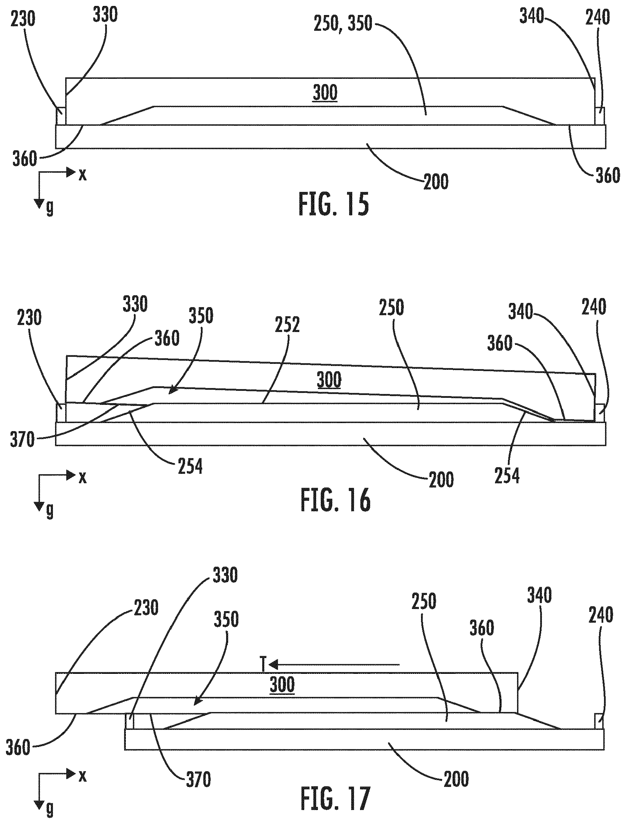

An example of the removal process of a storage tray **300** from a storage bay **210** is illustrated schematically in FIGS. 15-17. FIG. 15 shows the storage tray **300** positioned within the storage bay **210** delimited by the front wall(s) **230,** the rear wall(s) **240,** and the dividers **(220,** not shown, since FIGS. 15-17 are cross-sectional views along a cut plane through a protrusion **250),** with each protrusion **250** being engaged within a corresponding one of the recesses **350.** FIG. 16 shows the front surface **330** of the storage tray **300** lifted vertically, such that the bottom-most edge to be positioned for passing over (e.g., be above) the top surface of the front wall(s) **230** at the front edge of the storage bay **210.** Thus, as shown in FIG. 16, the storage tray **300** has pivoted in a clockwise direction about a contact point between the rear surface **340** of the storage tray **300** and the rear wall **240** from the position in which the storage tray **300** is fully engaged within the storage bay **210,** as shown in FIG. 15. In FIG. 17, the storage tray **300** has moved, relative to the position of the storage tray **300** with respect to the storage bay **210** shown in FIG. 16, in both a translatory aspect in the direction **T** and in a rotary aspect in the anticlockwise direction, the rotary movement being about the bottom-most edge of the front surface **330** of the storage tray **300.** Thus, in FIG. 17, the storage tray **300** is an orientation in which the bottom surface **370** thereof is oriented in a plane that is generally perpendicular (e.g., allowing for misalignments of up to 10°, up to 5°, up to 1°) to the direction of gravity **g,** such that the bottom surface **370** of the storage tray **300** slides along the front wall(s) **230** at the front edge of the storage bay **210** simultaneous to one of the flat portions **360** adjacent to (e.g., closest to) the rear surface **340** of the storage tray **300** sliding along first the sloped surface **254** and then the flat top surface **252** of one of the protrusions **250** as the storage tray **300** moves from the position shown in FIG. 16 to the position shown in FIG. 17. During an initial movement phase of the storage tray **300** between the position shown in FIG. 16 and the position shown in FIG. 17, each of the flat portions **360** adjacent to (e.g., closest to) the front surface **330** of the storage tray **300** first moves over, generally in the direction **T,** a corresponding one of the front wall(s) **230** and is either spaced apart from (e.g., does not touch) such front wall **230** or is in contact with (e.g., direct contact with) such front wall **230** while the storage tray **300** moves in the direction **T.**

As disclosed herein, the storage tray **300** is any suitably-shaped structure for containing one or more items positioned thereon. The storage tray **300** is configured to be securely confined (e.g., held, in a removable manner) within a storage bay **210** (e.g., any designated storage location, such as on a designated position on a shelf **200)** of an automated storage and retrieval system. When positioned within the storage bay (e.g., as shown in FIG. 15), the storage tray **300** is restrained from moving in the Y- and/or X-directions without a corresponding movement of at least a portion of the storage tray in the direction perpendicular to the X-Y plane. However, the positional restraint of the storage tray **300** within a storage bay **210** is configured to be "unlocked" by engagement of the transport system **400** with one of the movement features **390** of the storage tray **300** (e.g., as shown in FIG. 16). The transport system **400** is advantageously autonomously operable to secure the storage tray **300** within a designated storage bay **210** of the automated storage and retrieval system and/or to remove the storage tray **300** from the storage bay **210** for transport within the automated storage and retrieval system, including for delivery of the contents of the storage tray **300** to an authorized recipient at an external access point of the automated storage and retrieval system.

The storage tray **300** is restrained (e.g., positionally "locked" in the X-Y plane) within the storage bay **210** using the force of gravity **g,** with the front wall(s) **230** and the rear wall(s) **240** of the storage bay **210** being provided to resist and/or restrict motion of the storage tray **300** relative to the storage bay **210** in the X-direction, the dividers **220** on opposite lateral sides of the storage bay **210** being provided to resist and/or restrict motion of the storage tray **300** in the Y-direction, and the gravity force g acting on the storage tray **300** to resist and/or restrict vertical movements of the storage tray **300** relative to the storage bay **210,** thereby exerting a force on the storage tray **300** to maintain contact (e.g., direct contact) between the storage tray **300** and the upper surface of the shelf **200** within the storage bay **210.**

The positional locking, or movement restriction, features of the storage tray **300** (e.g., at least the front and rear surfaces **330, 340** and the recesses **350**) are configured to engage with the positional locking, or movement restriction, features of the storage bay **210** (e.g., at least the front and rear walls **230, 240** and the protrusions **250**) to resist a displacement movement of the storage tray **300** from the storage bay **210** while the storage tray **300** is being stored within the automated storage and retrieval system and not being engaged by the transport system **400.** Thus, relative movement of the storage tray **300** relative to the storage bay **210** in which such storage tray **300** is deposited for storage is restricted in all directions, such that displacement movements imparted to the storage tray **300** are resisted. Such displacement movements can be imparted, for example and without limitation, in the event of transportation and/or movement of the entire automated storage and retrieval system, areas of human interaction, non-level operation, or any other situation wherein the storage tray **300** may be acted upon by an external force that could cause displacement of the storage tray **300** relative to the storage bay **210** within the automated storage and retrieval system from the desired, specified, or last known position (e.g., the designated storage bay **210,** as may be designated by a controller for the automated storage and retrieval system).

In some embodiments, depositing the storage tray **300** into a designated storage bay **210** comprises using the transport system **400** to align the storage tray **300** (e.g., vertically) with the shelf **200** on which the designated storage bay **210** is located, such that the bottom surface **370** of the storage tray **300** is aligned with (e.g., above or coplanar with) the top surface of at least the front wall(s) **230** of the designated storage bay **210.** Before, at the same time as, or subsequent to the storage tray **300** being sufficiently vertically aligned with the designated bay **210** by the transport system **400,** the transport system **400** is also configured to align the storage tray **300** with the designated storage bay **210** in the Y-direction, in which case a centerline of the storage tray **300** extending in the X-direction and a centerline of the storage bay, also extending in the X-direction, are substantially coaxial with each other. Stated somewhat differently, in aligning the storage tray **300** with the designated storage bay **210** in the Y-direction, the storage tray **300** is positioned such that each recess **350** thereof is aligned with a corresponding one of the protrusions **250** in the designated storage bay **210,** such that when the storage tray **300** is moved in the X-direction for depositing within the designated storage bay, each protrusion **250** of the designated storage bay **210** engages within a corresponding one of the recesses **350** of the storage tray **300.**

After the storage tray **300** is sufficiently vertically and laterally aligned, using the transport system **400,** with the designated storage bay **210,** the transport system **400** is then configured to, by engagement with the one or both of the movement features **390** (e.g., at least the movement feature **390** closest to the front surface **330** of the storage tray **300**) of the storage tray **300,** move the storage tray **300** in the X-direction so that the storage tray **300** is transferred from the transport system **300** onto the shelf **200** and into the designated storage bay **210.** In transferring the storage tray **300** into the designated storage bay **210,** the transport system **400** moves the storage tray **300** so that the rear surface **340** of the storage tray **300,** as well as the flat portions **360** adjacent to the rear surface **340,** pass vertically over the front wall(s) **230** at the front edge of the storage bay **210,** such that the bottom surface **370** moves (e.g., slides, such as in direct contact) over the front wall(s) **230** and the flat portions **360** adjacent to the rear surface **340** slide along the flat top surface **252** of a corresponding one of the protrusions **250** while the storage tray **300** moves in the X-direction towards the rear wall(s) **240** of the designated storage bay **210.**

As the storage tray **300** continues to move in the X-direction, the flat portions **360** adjacent to the rear surface **340** reach the end of the flat top surface **252** of the protrusion **250** against which such flat portion **360** has slid along, such that, as the movement of the storage tray **300** in the X-direction continues, the flat portion **360** in contact with each protrusion **250** transitions from the flat top surface **252** of the protrusion **250** to instead slide along the sloped surface **254** of the protrusion **250** that is closest to the rear wall(s) **240** of the storage bay **210.** As each flat portion **360** slides along the sloped surface **254** of the corresponding protrusion **250,** the storage tray **300** pivots in the clockwise direction about the point where the bottom surface **370** of the storage tray **300** contacts the top surface of the front wall(s) **230** simultaneously as the entire storage tray **300** continues to move in the X-direction towards the rear wall(s) **240.** This pivoting movement of the storage tray **300** in the clockwise direction continues until the flat portions **360** contact the upper surface of the shelf **200** within the storage bay **210** (e.g., when the flat portions **360** are no longer sliding along the sloping portion of the protrusions **250** nearest the rear wall(s) **240),** at which point the storage tray **300** continues moving towards the rear wall(s) **240** in the X-direction and the pivoting movement of the storage tray **300** stops or reverses (e.g., to pivot slightly in the anticlockwise direction about the same pivot point). It should be noted that, since the contact point of the bottom surface **370** on the top surface of the front wall(s) **230** changes as the storage tray **300** moves in the X-direction, the pivot point of the storage tray **370** changes as the point where the bottom surface **370** contacts the top surface of the front wall(s) **230** changes.

The transport system **400** continues to move the storage tray **300** until the rear surface of the storage tray **300** reaches (e.g., contacts directly, or is adjacent to) the rear wall(s) **240** at the rear edge of the designated storage bay **210,** at which point the transport system **400** lowers (e.g., vertically) the front surface **330** of the storage tray **300** towards the upper surface of the shelf **200,** such that each protrusion **250** is positioned within a corresponding one of the recesses **350** formed in the lateral edges of the storage tray **300.** As the front surface **330** is lowered by the transport system **400,** the storage tray **300** pivots about the point of contact where the rear surface **340** is in contact with the rear wall(s) **240** and/or the upper surface of the shelf **200.** The front surface **330** is lowered by the transport system **400** until the flat portions **360** adjacent to the front wall(s) **230** and the flat portions adjacent to the rear wall(s) **240** are each against the upper surface of the shelf **200,** such that the front and rear walls **230, 240** at the front and rear edges of the designated storage bay **210** restrict and/or resist any movement of the storage tray **300** in the X-direction beyond such front and rear walls **340,** respectively, without the storage tray **300** being vertically displaced (e.g., moved) to pass over the front or rear walls **230, 240.** In such position, the storage tray **300** is substantially positionally locked within the designated storage bay **210** on the shelf **200** in the X-Y plane.

The protrusions **250** are advantageously installed on both lateral sides of the storage bay **210** and are configured to raise the free end of the storage tray **300** (e.g., the end of the storage tray **300** that is opposite from the end where the transport system **400** is engaged with one of the movement features **390** of the storage tray **300**) when the storage tray **300** is being loaded onto the transport system **400** (e.g., by removing the storage tray **300** from the storage bay **210** in which such storage bay **300** had been positioned), which requires, in some embodiments, the storage tray **300** to be substantially level (e.g., coplanar with the X-Y plane, which is perpendicular to gravity **g**) to complete the loading process of the storage tray **300** onto the transport system **400** from the storage bay **210.** The protrusions **250** are also configured to allow such free end of the storage tray **300** (e.g., the end of the storage tray **300** that is opposite from the end where the transport system **400** is engaged with one of the movement features **390** of the storage tray **300**) to pass over the top surface (e.g., defined in the direction opposite the direction of gravity **g)** of the front wall(s) **230** of the storage bay **210** as the storage tray **300** transitions onto the transport system **400** for transport elsewhere within the automated storage and retrieval system.

According to an example embodiment, an automated storage and retrieval system is provided, the automated storage and retrieval system comprising: an area configured for holding one or more items; an inductor configured to receive and induct the one or more items; a conveyor configured to convey the one or more items from the inductor to any of a plurality of locations within the area; and an extraction station; wherein, when a designated item of the one or more items is designated for removal from the area, the conveyor is configured to deliver the designated item to the extraction station; and wherein, after receipt of the designated item from the conveyor, the extraction station is configured to deliver the designated item to a user for extraction of the designated item from the automated storage and retrieval system.

In some or all embodiments, the automated storage and retrieval system comprises a heater and/or a cooler configured to maintain a prescribed temperature within the area, the prescribed temperature being a different temperature from an ambient temperature external to the area, such that the one or more items are stored within the area at the prescribed temperature.

In some or all embodiments of the automated storage and retrieval system, the area comprises at least a portion of an interior of a delivery truck, a towable conveyance, a warehouse, a grocery store, or a retail store.

In some or all embodiments of the automated storage and retrieval system, the area comprises at least the portion of the inside of the delivery truck and further comprises one or more storage shelves arranged within the area, each of the one or more storage shelves comprising one or more self-locking trays, bins, and/or storage areas.

In some or all embodiments of the automated storage and retrieval system, the one or more items are a plurality of differently sized items and the one or more self-locking storage trays, bins, and/or storage areas are configured to store the differently sized items thereon.

In some or all embodiments of the automated storage and retrieval system, the items are parcels ranging in size from letters and postcards to parcels as large as the one or more self-locking storage trays, bins, and/or storage areas.

In some or all embodiments of the automated storage and retrieval system, the area comprises a compartment for storing any item that is larger than can be stored in or on the one or more self-locking storage trays, bins, and/or storage areas.

In some or all embodiments of the automated storage and retrieval system, the inductor comprises an induction station having an opening large enough to receive the one or more items.

In some or all embodiments of the automated storage and retrieval system, the induction station interfaces with the conveyor; and the conveyor is configured to receive the one or more items from the induction station and convey the one or more items to the area.

In some or all embodiments of the automated storage and retrieval system, the conveyor comprises one or more of a crane, a robotic arm, and/or a robotic claw.

In some or all embodiments of the automated storage and retrieval system, the area comprises at least a portion of an interior of a delivery truck and the crane is configured to move dynamically based on a movement, speed, acceleration, braking, yaw, pitch, and/or tilt of the delivery truck.

In some or all embodiments of the automated storage and retrieval system, the conveyor is configured to receive the one or more items from the induction station and to convey the one or more items to the one or more self-locking storage trays, bins, or storage areas.

In some or all embodiments of the automated storage and retrieval system, the conveyor is configured to retrieve the one or more items from the one or more self-locking storage trays, bins, and/or storage areas and to convey the one or more items to the extraction station.

In some or all embodiments, the automated storage and retrieval system comprises a dedicated power source independent of a grid-tied power source.

According to another example embodiment, a vehicle is provided, the vehicle comprising: any automated storage and retrieval system disclosed herein; and a secondary power source in electrical communication with the automated storage and retrieval system for providing power when an engine or drive motor of the vehicle is in an off state.

In some or all embodiments, the vehicle comprises a geo-location-based guidance system configured to provide delivery information to a driver of the vehicle based on an order in which the one or more items are specified to be delivered according to a delivery route.

In some or all embodiments, the vehicle comprises a controller configured to presort the one or more items within the area based on a delivery address for each of the one or more items, the delivery address for each of the one or more items being contained in a delivery route manifest provided to the controller.

In some or all embodiments of the vehicle, the controller is configured to control the conveyor is to automatically convey all of the one or more items having a first delivery address to the extraction station at or before a time the vehicle arrives at the first delivery address.

In some or all embodiments of the vehicle, the controller is configured to control the conveyor such that, as all of the one or more items are delivered at the first delivery address, all of the one or more items having a second delivery address are automatically conveyed to the extraction station, the second delivery address being a subsequent delivery address to the first delivery address.

In some or all embodiments of the vehicle, the vehicle is configured, in an autonomous manner, to determine a delivery route containing each delivery address for each of the one or more items inducted into the area; travel along the delivery route; and deliver the one or more items to intended recipients of the one or more items along the route.

In some or all embodiments of the vehicle, the vehicle is a delivery truck or a delivery van.

According to another example embodiment, a parcel delivery system is provided, the parcel delivery system comprising: one or more computing systems comprising route manifest and storage optimization software; and a plurality of any of the vehicles disclosed herein, each of the plurality of vehicles being in communication with the one or more computing systems; wherein, when executed on the one or more computing systems, the route manifest and storage optimization software is configured to: generate a delivery route manifest for each of the plurality of vehicles, wherein the delivery route manifest for a particular vehicle is generated based on the delivery address for each of the one or more items inducted into the area of the system of the particular vehicle; transmit the delivery route manifest for each of the plurality of vehicles to the automated storage and retrieval system of a corresponding one of the vehicles; generate an optimized storage logic for storage of the one or more items within the area for the system of each vehicle before the one or more items are inducted into the area of each such vehicle; and notify a user of the system when any of the one or more items loaded into the area of one of the systems have a same delivery address.

In some or all embodiments of the parcel delivery system, the route manifest and storage optimization software is configured such that, as the one or more items are delivered along the delivery route manifest, a remaining portion of the delivery route manifest is updated and optimized based on substantially real-time traffic and/or weather data and/or based on an input received from a designated recipient for any of the one or more items that have not yet been delivered.

In some or all embodiments of the parcel delivery system, the parcel delivery system is configured to notify an operator of the vehicle when a plurality of the one or more items have a same delivery address on or before attempted delivery of the plurality of the one or more items.

According to another example embodiment, a method of storing and conveying parcels is provided, the method comprising: providing an area configured for holding one or more parcels; using a parcel inductor to induct one or more parcels into the area; using a parcel conveyor to convey the inducted parcel to a location within the area; and using the parcel conveyor to convey one or more parcels from the area to a parcel extraction area.

In some or all embodiments of the method of storing and conveying parcels, the area comprises an inside of a delivery truck, a warehouse, a grocery store, or a retail store.

In some or all embodiments of the method of storing and conveying parcels, the area comprises the inside of a delivery truck; wherein the method further comprises conveying the one or more parcels into one or more storage shelves comprising one or more self-locking trays, bins, or storage areas.

In some or all embodiments of the method of storing and conveying parcels, the area comprises one or more storage trays, bins, or storage areas configured to store parcels ranging in size from letters and postcards to parcels as large as the one or more storage trays, bins, or storage areas.

In some or all embodiments of the method of storing and conveying parcels, the parcel inductor comprises a parcel induction station having an opening large enough to receive any parcel small enough to fit in the area.

In some or all embodiments of the method of storing and conveying parcels, the induction station interfaces with the parcel conveyor; wherein the parcel conveyor is configured to receive the parcel from the induction station and convey the parcel to the area.

In some or all embodiments of the method of storing and conveying parcels, the parcel conveyor comprises one or more of the following: a conveyor belt, a crane, a robotic arm, a robotic claw, or any other suitable conveyor.

In some or all embodiments of the method of storing and conveying parcels, the parcel conveyor comprises a crane configured to move dynamically based on the delivery truck's movement, speed, acceleration, braking, tilt, and other similar environmental forces.

In some or all embodiments, the method of storing and conveying parcels comprises receiving, at the parcel conveyor, parcels from the induction station; and conveying the parcels to the one or more storage trays, bins, or storage areas within the area.

In some or all embodiments, the method of storing and conveying parcels comprises retrieving parcels, using the parcel conveyor, from the one or more storage tray, bins, or storage areas; and conveying the parcels to the parcel extraction station for parcel extraction.

In some or all embodiments of the method of storing and conveying parcels, the area includes a dedicated compartment for extra-large parcels that cannot fit in the one or more storage trays or bins.

In some or all embodiments of the method of storing and conveying parcels, the method further comprises presorting parcels in the area according to a parcel delivery route manifest of the delivery truck.

In some or all embodiments, the method of storing and conveying parcels comprises using a geo-guidance system to provide delivery information to the driver of the delivery truck based on the parcel being delivered.

In some or all embodiments, the method of storing and conveying parcels comprises automatically conveying, via the parcel conveyor, an appropriate parcel to the parcel extraction station at or before a time a driver of the delivery truck arrives at the delivery address of the appropriate parcel.

In some or all embodiments, the method of storing and conveying parcels comprises automatically conveying, via the parcel conveyor, a next appropriate parcel associated with a next delivery address as the driver of the delivery truck delivers the appropriate parcel.

According to another example embodiment, a method of delivering parcels is provided, the method comprising: providing each of one or more parcel delivery trucks with one or more automated storage and retrieval systems comprising: an area configured for holding one or more parcels; a parcel inductor configured to receive and induct the one or more parcels; a parcel conveyor configured to convey the one or more parcels to locations within the area; and a parcel extraction station configured such that when a parcel is ready to be extracted from the area, the parcel conveyor is configured to deliver the parcel to the parcel extraction station and a user can extract the parcel from the area; each automated storage and retrieval system being in communication with one or more computing systems comprising route manifest and storage optimization software; generating a route manifest for all of the one or more parcel delivery trucks based on a destination of each parcel being delivered; transmitting a relevant portion of the route manifest to the automated storage and retrieval system of each of the parcel delivery trucks; generating an optimized storage logic for storage in one or more storage trays, bins, or storage areas within the area before the parcels are inducted into the area; and notifying a user of the automated storage and retrieval system that one or more parcels that are being loaded have the same destination.

In some or all embodiments, the method of delivering parcels comprises updating and optimizing the relevant portion of the route manifest as the parcels are delivered; and notifying, via the parcel delivery system, a driver of the delivery truck that one or more secondary parcels go to the same destination address.

## Claims

1. A vehicle comprising an automated storage and retrieval system, the automated storage and retrieval system comprising:
an area configured for storage of items and comprising locations, each location being configured for holding one or more of the items;
an inductor configured to receive and induct the items into the automated storage and retrieval system;
a conveyor configured to convey the items from the inductor to the area; and
an extraction station;
wherein, when a designated item of the items is designated for removal from the area, the conveyor is configured to deliver the designated item to the extraction station; and
wherein, after receipt of the designated item from the conveyor, the extraction station is configured to deliver the designated item to a designated recipient for extraction of the designated item from the automated storage and retrieval system.

2. The vehicle of claim 1, wherein:
the area comprises a plurality of shelves on which are provided one or more self-locking storage trays, bins, and/or storage areas;
items are parcels ranging in size from letters and postcards to parcels as large as the one or more self-locking storage trays, bins, and/or storage areas; and
optionally, the area comprises a compartment for storing any item that is larger than can be stored in or on the one or more self-locking storage trays, bins, and/or storage areas.

3. The vehicle of claim 1, wherein:
the conveyor comprises one or more of a crane, a robotic arm, and/or a robotic claw; and
optionally, the crane is configured to move dynamically based on a movement, speed, acceleration, braking, yaw, pitch, and/or tilt of the vehicle.

4. The vehicle of claim 1, comprising:
a geo-location-based guidance system configured to provide delivery information to an operator of the vehicle based on an order in which the items are specified for delivery according to a delivery route; and/or
a controller configured to:
presort the items within the area based on a delivery address for each of the items, the delivery address for each item of the items being contained in a delivery route manifest provided to the controller; and/or
control the conveyor to automatically convey all of the items having a first delivery address to the extraction station at or before a time the vehicle arrives at the first delivery address; and/or
before, at the same time, or after all of the items are delivered at the first delivery address, all of the items having a second delivery address are automatically transferred, via the conveyor, to the extraction station, wherein the second delivery address is a subsequent delivery address to the first delivery address in the delivery route.

5. The vehicle of claim 4, wherein the vehicle is configured, in an autonomous manner, to:
determine the delivery route, which contains each delivery address for each of the items inducted into the area;
travel along the delivery route; and
deliver the items to intended recipients of the items along the delivery route.

6. A parcel delivery system comprising:
one or more computing systems comprising route manifest and storage optimization software; and
a plurality of the vehicles of claim 1, each of the plurality of vehicles being in communication with the one or more computing systems;
wherein, when executed on the one or more computing systems, the route manifest and storage optimization software is configured to:
generate a delivery route manifest for each of the plurality of vehicles, wherein the delivery route manifest for a particular vehicle is generated based on the delivery address for each of the items inducted into the area of the system of the particular vehicle;
transmit the delivery route manifest for each of the plurality of vehicles to the automated storage and retrieval system of a corresponding one of the vehicles;
generate an optimized storage logic for storage of the items within the area for the system of each vehicle before the items are inducted into the area of each such vehicle; and
notify a user of the system when any of the items loaded into the area of one of the systems have a same delivery address.

7. The parcel delivery system of claim 6, wherein the route manifest and storage optimization software is configured such that, as the items are delivered along the delivery route, a remaining portion of the delivery route is updated and optimized based on substantially real-time traffic and/or weather data and/or based on an input received from a designated recipient for any of the items that have not yet been delivered.

8. A method of storing and retrieving items for delivery, the method comprising:
providing one or more vehicles, each of which comprises an automated storage and retrieval system, which comprises:
an area;
an inductor;
a conveyor; and
an extraction station;
receiving, using the inductor, items designated for delivery to a same or different delivery addresses;
conveying, using the conveyor, the items from the inductor to locations contained within the area;
conveying, using the conveyor, a designated item of the items to the extraction station when the designated item is designated for removal from the area; and
delivering, using the extraction station, the designated item to a designated recipient for extraction of the designated item from the automated storage and retrieval system after receipt of the designated item from the conveyor at the extraction station.

9. The method of claim 8, wherein:
the area comprises a plurality of shelves on which are provided one or more self-locking storage trays, bins, and/or storage areas; and
items are parcels ranging in size from letters and postcards to parcels as large as the one or more self-locking storage trays, bins, and/or storage areas; and
optionally, the method comprising:
providing a compartment and storing any item that is larger than can be stored in or on the one or more self-locking storage trays, bins, and/or storage areas within the compartment.

10. The method of claim 8, wherein the conveyor comprises one or more of a crane, a robotic arm, and/or a robotic claw; and, optionally, the method comprising moving the crane dynamically based on a movement, speed, acceleration, braking, yaw, pitch, and/or tilt of the vehicle.

11. The method of claim 8, comprising providing, using a geo-location-based guidance system, delivery information to an operator driver of the vehicle based on an order in which the items are specified to be delivered according to a delivery route.

12. The method of claim 8, comprising:
providing, using a geo-location-based guidance system, delivery information to an operator of the vehicle based on an order in which the items are specified for delivery according to a delivery route; and/or
presorting, using a controller, the items within the area based on a delivery address for each of the items, the delivery address for each item of the items being contained in a delivery route manifest provided to the controller; and/or
controlling, using the controller, the conveyor to automatically convey all of the items having a first delivery address to the extraction station at or before a time the vehicle arrives at the first delivery address; and/or
automatically transferring, using the controller, all of the items having a second delivery address to the extraction station before, at the same time, or after all of the items are delivered at the first delivery address, wherein the second delivery address is a subsequent delivery address to the first delivery address in the delivery route.

13. The method of claim 12, comprising, in an autonomous manner:
determining the delivery route, which contains each delivery address for each of the items inducted into the area;
travelling along the delivery route; and
delivering the items to intended recipients of the items along the delivery route.

14. The method of claim 8, wherein the one or more vehicles are a plurality of vehicles, the method comprising:
providing one or more computing systems comprising route manifest and storage optimization software;
connecting each of the plurality of vehicles in communication with the one or more computing systems;
and executing the route manifest and storage optimization software on the one or more computing systems to:
generate a delivery route manifest for each of the plurality of vehicles, wherein the delivery route manifest for a particular vehicle is generated based on the delivery address for each of the items inducted into the area of the system of the particular vehicle;
transmit the delivery route manifest for each of the plurality of vehicles to the automated storage and retrieval system of a corresponding one of the vehicles;
generate an optimized storage logic for storage of the items within the area for the system of each vehicle before the items are inducted into the area of each such vehicle; and
notify a user of the system when any of the items loaded into the area of one of the systems have a same delivery address.

15. The method of claim 14, comprising using the route manifest and storage optimization software as the items are delivered along the delivery route to update and optimize a remaining portion of the delivery route based on substantially real-time traffic and/or weather data and/or based on an input received from a designated recipient for any of the items that have not yet been delivered.
